# EUROPÄISCHE PATENTSCHRIFT

(11) **EP 2 852 464 B1**
(45) Veröffentlichungstag und Bekanntmachung des Hinweises auf die Patenterteilung: **28.06.2017**
(21) Anmeldenummer: 13730799.7
(22) Anmeldetag: 16.05.2013
(51) Int. Cl.: B02C 18/18, B02C 18/14

(54) **SCHNEIDVORRICHTUNG**
CUTTING DEVICE
DISPOSITIF DE COUPE

(30) Priorität: 21.05.2012 DE 102012009852
(43) Veröffentlichungstag der Anmeldung: 01.04.2015
(73) Patentinhaber: Willibald, Artur, 88662 Überlingen (DE)
(72) Erfinder: Willibald, Artur, 88662 Überlingen (DE)
(74) Vertreter: Daub, Thomas
(86) Internationale Anmeldenummer: PCT/EP2013/001453
(87) Internationale Veröffentlichungsnummer: WO 2013/174496

(56) Entgegenhaltungen:
- DE-U1-202005 009 859
- DE-U1-202005 010 337
- US-A1- 2002 017 580

## Beschreibung

### Stand der Technik

Die Erfindung betrifft eine Schneidvorrichtung nach dem Oberbegriff des Anspruchs 1 und ein Basiselement nach dem Oberbegriff des Anspruchs 11. Aus der DE 10 2006 032 295 A1 ist eine Schneidvorrichtung für einen Zerkleinerungsrotor zur Holz- und/oder Erdreichzerkleinerung mit wenigstens einem Schneidenhalter bekannt, welcher zu einer Fixierung an einem Basiselement des Zerkleinerungsrotors vorgesehen ist. Der Schneidenhalter umfasst einen Grundkörper mit zwei parallelen, voneinander beabstandeten Schenkeln, welche in einem Endbereich jeweils mit einer Bohrung versehen sind, wobei die Bohrungen miteinander fluchten. In einem montierten Zustand ist das ebenfalls mit einer Bohrung versehene Basiselement zwischen den Schenkeln angeordnet, wobei eine Schraube durch die fluchtenden Bohrungen der Schenkel und des Basiselements geführt ist, wodurch der Schneidenhalter am Basiselement fixiert ist. In einem Betriebszustand stützt sich der Schneidenhalter gegen einen am Basiselement angeordneten Anschlag ab. Eine derartige Schneidvorrichtung ist auch aus der DE 20 2005 009 859 U1 bekannt.

Die Aufgabe der Erfindung besteht insbesondere darin, einen Zerkleinerungsrotor mit vorteilhaft geringen Betriebskosten bereitzustellen. Die Aufgabe wird erfindungsgemäß durch die kennzeichnenden Merkmale der Patentansprüche 1 und 11 gelöst, während vorteilhafte Ausgestaltungen und Weiterbildungen der Erfindung den Unteransprüchen entnommen werden können. Die Erfindung ist definiert durch die Ansprüche 1-13.

### Vorteile der Erfindung

Die Erfindung geht aus von einer Schneidvorrichtung für einen Zerkleinerungsrotor, insbesondere zur Holz- und/oder Erdreichzerkleinerung, insbesondere zum Mulchen, Schreddern und/oder Hacken, mit wenigstens einem Schneidenhalter.

Es wird vorgeschlagen, dass der Schneidenhalter zumindest eine Nut umfasst, die dazu vorgesehen ist, ein Basiselement des Zerkleinerungsrotors zumindest teilweise aufzunehmen, und die wenigstens eine Längsmittellinie mit zumindest zwei winklig zueinander ausgerichteten Teilstrecken aufweist. Unter einer "Schneidvorrichtung" soll insbesondere eine Vorrichtung verstanden werden, welche dazu vorgesehen ist, Material, insbesondere Holz und/oder Erdreich, insbesondere auch Gestein, zu zerkleinern, insbesondere zu zerschneiden und/oder zu zerhacken und/oder zu zertrümmern. Insbesondere ist die Schneidvorrichtung dazu vorgesehen, an dem Basiselement des Zerkleinerungsrotors befestigt zu werden. Unter einem "Schneidenhalter" soll insbesondere eine Baueinheit verstanden werden, welche in einem montierten Zustand wenigstens eine Schneide fixiert und welche insbesondere in wenigstens einem Betriebszustand auf die Schneide wirkende Kräfte aufnimmt und/oder ableitet. Die Schneide kann insbesondere unmittelbar am Schneidenhalter befestigt sein. Die Schneide kann auf beliebige, einem Fachmann als sinnvoll erscheinende Weise mit dem Schneidenhalter verbunden sein, insbesondere lösbar, beispielsweise durch eine Schraubverbindung, oder vorzugsweise unlösbar, insbesondere durch eine einstückige Ausgestaltung. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, vorzugsweise einen Lötprozess, und/oder in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Alternativ kann die Schneide auch über wenigstens eine weitere Einheit, insbesondere eine Adaptereinheit, am Schneidenhalter befestigt sein. Unter einer "Schneide" soll in diesem Zusammenhang insbesondere ein Element verstanden werden, welches dazu vorgesehen ist, bei einem Zerkleinerungsvorgang Material, insbesondere Holz und/oder Erdreich, insbesondere auch Gestein, mechanisch zu zerschneiden und/oder zu zerhacken und/oder zu zertrümmern. Vorzugsweise besteht die Schneide zumindest teilweise aus einem härteren Material als der Schneidenhalter, insbesondere aus gehärtetem Stahl oder besonders vorteilhaft aus einem Hartmetallwerkstoff. Unter "vorgesehen" soll insbesondere speziell ausgelegt und/oder ausgestattet verstanden werden.

Unter einem "Zerkleinerungsrotor" soll in diesem Zusammenhang insbesondere ein Rotationskörper verstanden werden, welcher dazu vorgesehen ist, zur Durchführung eines Zerkleinerungsvorgangs mit wenigstens einer Schneidvorrichtung bestückt zu werden. In einem Betriebszustand rotiert der Zerkleinerungsrotor um seine Längsachse, wodurch die Schneidvorrichtung mit dem zu zerkleinernden Material in Kontakt gebracht wird. Unter einer "Längsachse" des Zerkleinerungsrotors soll insbesondere eine Rotationssymmetrieachse eines geometrischen Zylinders kleinsten Volumens verstanden werden, welcher den Zerkleinerungsrotor gerade noch umschließt. Der Zerkleinerungsrotor umfasst insbesondere einen Grundkörper, welcher vorzugsweise rotationssymmetrisch ausgebildet ist und an welchem wenigstens ein Basiselement befestigt ist, vorzugsweise drehfest. Besonders vorteilhaft ist der Grundkörper zumindest teilweise als ein Rundrohr ausgebildet. Das Basiselement kann dabei auf beliebige, dem Fachmann als sinnvoll erscheinende Weise am Grundkörper befestigt sein, insbesondere durch eine Schraubverbindung und vorzugsweise durch eine einstückige Ausgestaltung. Vorzugsweise ist das Basiselement mit dem Grundkörper verschweißt. Unter einem "Basiselement", soll insbesondere ein Element verstanden werden, welches in einem montierten Zustand die Schneidvorrichtung an dem Grundkörper des Zerkleinerungsrotors befestigt, vorzugsweise drehfest.

Unter einer "Nut" soll in diesem Zusammenhang insbesondere eine Ausnehmung im Schneidenhalter verstanden werden, welche zumindest teilweise und vorzugsweise vollständig durch eine längliche Vertiefung gebildet ist, deren Enden insbesondere offen oder geschlossen sein können. Unter einer "Ausnehmung" soll in diesem Zusammenhang insbesondere eine Materialausnehmung in einem Bauteil verstanden werden. Unter einer "länglichen Vertiefung" soll insbesondere eine Vertiefung verstanden werden, deren Länge, d.h. deren Längserstreckung, größer ist als ihre maximale Breite, d.h. ihre Quererstreckung, und vorzugsweise auch größer ist als ihre Tiefe, d.h. ihre Tiefenerstreckung. Vorzugsweise ist eine Längsrichtung der Nut zumindest im Wesentlichen parallel zu einer Längsrichtung des Schneidenhalters ausgerichtet. Unter einer "Längsrichtung" eines Objekts soll insbesondere eine Richtung verstanden werden, welche parallel zu einer Kante eines kleinsten, das Objekt gerade noch umschließenden geometrischen Quaders ist.

Darunter, dass eine erste Richtung "zumindest im Wesentlichen parallel" zu einer zweiten Richtung ausgerichtet ist, soll insbesondere verstanden werden, dass die beiden Richtungen einen minimalen Winkel von höchstens 30°, insbesondere von maximal 20°, vorzugsweise von höchstens 10° und besonders vorteilhaft von maximal 5° einschließen. In einem montierten Zustand des Schneidenhalters am Zerkleinerungsrotor ist die Längsrichtung der Nut insbesondere zumindest im Wesentlichen parallel zu wenigstens einer Radialrichtung des Zerkleinerungsrotors ausgerichtet. Unter einer "Radialrichtung" des Zerkleinerungsrotors soll in diesem Zusammenhang insbesondere eine zur Längsachse des Zerkleinerungsrotors senkrechte Richtung verstanden werden. Unter einer "Längsmittellinie" der Nut soll insbesondere eine Linie verstanden werden, welche insbesondere zumindest einmal geknickt ist und welche längs der Nut und zumindest im Wesentlichen unmittelbar entlang zumindest einer die Nut begrenzenden Oberfläche des Schneidenhalters, insbesondere entlang eines Bodens der Nut, und innerhalb einer Spiegelsymmetrieebene der Nut verläuft. Darunter, dass die Längsmittellinie "zumindest im Wesentlichen unmittelbar entlang" zumindest einer Oberfläche des Schneidenhalters verläuft, soll insbesondere verstanden werden, dass die Längsmittellinie zu wenigstens 50 %, insbesondere zu mindestens 60 %, vorzugsweise zu zumindest 70 % und besonders vorteilhaft zu wenigstens 80 % unmittelbar entlang der Oberfläche verläuft. Unter einer "Teilstrecke" der Längsmittellinie soll insbesondere eine zumindest im Wesentlichen geradlinige Verbindung zweier auf der Längsmittellinie liegender Punkte verstanden werden, wobei sämtliche Punkte der Teilstrecke auf der Längsmittellinie liegen. Unter einer "zumindest im Wesentlichen geradlinigen Verbindung" soll insbesondere eine Verbindung verstanden werden, die entlang ihrer Längserstreckung eine Winkelabweichung von höchstens 5°, insbesondere von maximal 2,5° und vorzugsweise von höchstens 1° aufweist. Darunter, dass zwei Teilstrecken "winklig zueinander" ausgerichtet sind, soll insbesondere verstanden werden, dass die Teilstrecken einen Winkel einschließen, welcher sich von 0° und 180° unterscheidet.

Durch eine solche Ausgestaltung können vorteilhaft geringe Betriebskosten erreicht werden. Insbesondere kann durch die winklige Anordnung der Teilstrecken eine sichere Zentrierung und ein vorteilhaft fester Halt der Schneidvorrichtung am Basiselement, insbesondere in einer zur Längsachse des Zerkleinerungsrotors senkrechten Richtung, erreicht werden, wodurch ein Verschleiß vorteilhaft gering gehalten werden kann. Ferner können vorteilhaft geringe Stückkosten durch eine einfache und kostengünstige Fertigung ermöglicht werden, da der Schneidenhalter als Schmiedeteil ausgebildet werden kann. Des Weiteren kann mit einer relativ geringen Anforderung an eine Fertigungstoleranz des Schneidenhalters ausgekommen werden.

In einer bevorzugten Ausgestaltung der Erfindung wird vorgeschlagen, dass die Teilstrecken einen maximalen Winkel zwischen 110° und 140° einschließen. Insbesondere schließen die Teilstrecken einen maximalen Winkel zwischen 115° und 135°, vorzugsweise zwischen 120° und 130° und besonders vorteilhaft zwischen 123° und 125° ein. Hierdurch können eine besonders sichere Zentrierung und ein besonders vorteilhafter Halt der Schneidvorrichtung am Basiselement erzielt werden. Gemäß der Erfindung wird vorgeschlagen, dass die Nut durch zumindest zwei Oberflächenteilbereiche des Schneidenhalters begrenzt ist, die in einem Winkel zwischen 75° und 105° zueinander angeordnet sind. Insbesondere sind die zumindest zwei Oberflächenteilbereiche in einem Winkel zwischen 80° und 100°, vorzugsweise zwischen 85° und 95° und besonders vorteilhaft zwischen 89° und 91° zueinander angeordnet. Unter einem die Nut begrenzenden "Oberflächenteilbereich" des Schneidenhalters soll insbesondere ein Teil einer Oberfläche des Schneidenhalters verstanden werden, der unmittelbar benachbart zur Nut angeordnet ist. Vorzugsweise sind die Oberflächenteilbereiche zumindest teilweise und vorzugsweise wenigstens zu einem Großteil eben ausgebildet. Darunter, dass ein Oberflächenteilbereich "zumindest teilweise eben" ausgebildet ist, soll insbesondere verstanden werden, dass der Oberflächenteilbereich wenigstens einen ebenen Bereich umfasst, welcher insbesondere einen Flächeninhalt von zumindest 0,5 cm², vorzugsweise von wenigstens 1 cm² und besonders vorteilhaft von mindestens 2 cm² aufweist. Darunter, dass ein Oberflächenteilbereich "wenigstens zu einem Großteil eben" ausgebildet ist, soll insbesondere verstanden werden, dass der Oberflächenteilbereich wenigstens einen ebenen Bereich umfasst, welcher zumindest 60 %, insbesondere mindestens 70 %, vorzugsweise wenigstens 80 % und besonders vorteilhaft zumindest 90 % einer Gesamtoberfläche des Oberflächenteilbereichs ausmacht. Darunter, dass die Oberflächenteilbereiche "unter einem Winkel X zueinander angeordnet sind", soll insbesondere verstanden werden, dass ein Winkel zwischen einer beliebigen Flächennormalen des ersten Oberflächenteilbereichs und einer beliebigen Flächennormalen des zweiten Oberflächenteilbereichs maximal um 10°, insbesondere höchstens um 5° und vorzugsweise maximal um 1° von X abweicht. Hierdurch können eine Zentrierung und eine Halterung der Schneidvorrichtung am Basiselement weiter verbessert werden. Insbesondere kann ein vorteilhaft hoher Seitenhalt, insbesondere in einer zur Längsachse des Zerkleinerungsrotors parallelen Richtung, erreicht werden. Ferner kann vorteilhaft eine Verdrehsicherung der Schneidvorrichtung relativ zum Basiselement bereitgestellt werden.

Ferner wird vorgeschlagen, dass die Nut entlang wenigstens eines Großteils der Längsmittellinie einen zumindest im Wesentlichen dreieckförmigen Querschnitt aufweist. Darunter, dass ein Objekt entlang "wenigstens eines Großteils der Längsmittellinie" einen zumindest im Wesentlichen dreieckförmigen Querschnitt aufweist, soll insbesondere verstanden werden, dass das Objekt entlang eines insbesondere auch stückweisen Teilbereichs der Längsmittellinie, dessen Erstreckung zumindest 50 %, insbesondere wenigstens 60 %, vorzugsweise mindestens 70 % und besonders vorteilhaft zumindest 80 % einer Gesamterstreckung der Längsmittellinie entspricht, einen zumindest im Wesentlichen dreieckförmigen Querschnitt aufweist. Unter einem "zumindest im Wesentlichen dreieckförmigen" Querschnitt soll in diesem Zusammenhang insbesondere ein Querschnitt verstanden werden, welcher sich mit einem Flächenanteil von höchstens 30 %, insbesondere von maximal 20 %, vorzugsweise von höchstens 10 % und besonders vorteilhaft von maximal 5 % von einer Dreieckform unterscheidet. Vorzugsweise weist die Nut in entsprechenden Bereichen einen Querschnitt eines gleichschenkligen Dreiecks auf, wobei insbesondere Schenkel des gleichschenkligen Dreiecks durch die Oberflächenteilbereiche definiert sind. Hierdurch kann mit einem einfachen Design ein vorteilhaft sicherer Halt der Schneidvorrichtung am Basiselement erreicht werden.

Wenn der Schneidenhalter in wenigstens einer Seitenansicht zumindest im Wesentlichen V-förmig ausgebildet ist, kann eine vorteilhafte Krafteinleitung von der wenigstens einen am Schneidenhalter befestigten Schneide zum Zerkleinerungsrotor erreicht werden. Darunter, dass der Schneidenhalter "in wenigstens einer Seitenansicht zumindest im Wesentlichen V-förmig ausgebildet ist", soll insbesondere verstanden werden, dass der Schneidenhalter in der Seitenansicht betrachtet eine Form aufweist, welche mit einem Flächenanteil von höchstens 30 %, insbesondere von maximal 20 %, vorzugsweise von höchstens 10 % und besonders vorteilhaft von maximal 5 % von einer V-Form abweicht. Vorzugsweise ist die wenigstens eine vom Schneidenhalter getragene Schneide an einem Ende des Schneidenhalters angeordnet, wodurch vorteilhaft ein Verschleiß des Schneidenhalters minimiert werden kann. Ferner kann zusätzlich wenigstens ein Schildelement am Schneidenhalter vorgesehen sein, welches aus einem mechanisch widerstandsfähigeren Material als der Schneidenhalter besteht und welches dazu vorgesehen ist, den Schneidenhalter vor Verschleiß zu schützen. Dieses Schildelement ist vorzugsweise unterhalb der Schneide auf einer der Nut gegenüberliegenden Seite des Schneidenhalters angeordnet.

Vorteilhaft umfasst die Schneidvorrichtung wenigstens zwei Schneiden, welche an einander gegenüberliegenden Enden des Schneidenhalters auf einer der Nut gegenüberliegenden Seite des Schneidenhalters angeordnet sind. Hierdurch können ein Wartungsaufwand vorteilhaft reduziert und eine Standzeit vorteilhaft gesteigert werden. Ist die in Benutzung befindliche erste Schneide derart verschlissen, dass ein Wechsel nötig ist, kann der Schneidenhalter um 180° rotiert werden, so dass die zweite Schneide fortan bei der Zerkleinerung zum Einsatz kommt. Erst wenn beide Schneiden verschlissen sind, ist ein tatsächlicher Austausch der Schneiden und/oder des Schneidenhalters erforderlich.

In einer weiteren Ausgestaltung der Erfindung wird vorgeschlagen, dass der Schneidenhalter zumindest eine Ausnehmung zu einer Durchführung eines Verbindungsmittels aufweist, welches dazu vorgesehen ist, den Schneidenhalter am Basiselement zu befestigen. Vorzugsweise ist die Ausnehmung vollständig durch den Schneidenhalter hindurchgehend und vorzugsweise allseitig von Material des Schneidenhalters umgeben ausgebildet. Vorzugsweise weist der Schneidenhalter genau eine Ausnehmung auf. Vorzugsweise ist die Ausnehmung wenigstens in einem Teilbereich zumindest im Wesentlichen zylindrisch. Darunter, dass die Ausnehmung im Teilbereich "zumindest im Wesentlichen zylindrisch" ist, soll insbesondere verstanden werden, dass eine Form der Ausnehmung im Teilbereich mit einem Volumenanteil von höchstens 20 %, insbesondere von maximal 10 %, vorzugsweise von höchstens 5 % und besonders vorteilhaft von maximal 1 % von einem Zylinder abweicht. Die Ausnehmung kann insbesondere von einer Wandung begrenzt sein, welche ein Gewinde aufweist. Vorzugsweise ist die die Ausnehmung begrenzende Wandung jedoch zumindest im Wesentlichen glatt ausgebildet. Bei dem Verbindungsmittel kann es sich um ein beliebiges, dem Fachmann als sinnvoll erscheinendes Verbindungsmittel handeln, insbesondere um ein bolzenartiges Verbindungsmittel, vorzugsweise um eine Gewindestange und besonders vorteilhaft um eine Schraube. Hierdurch kann eine vorteilhafte und insbesondere lösbare Halterung der Schneidvorrichtung am Basiselement erreicht werden. Wenn eine Längsrichtung der Ausnehmung in einem montierten Zustand der Schneidvorrichtung am Zerkleinerungsrotor unter einem Winkel zwischen 70° und 110°, insbesondere zwischen 80° und 100°, vorzugsweise zwischen 85° und 95° und besonders vorteilhaft zwischen 88° und 92° zur Längsachse des Zerkleinerungsrotors ausgerichtet ist, kann ein Wartungsaufwand vorteilhaft reduziert werden, da durch eine vorteilhafte Zugänglichkeit des Verbindungsmittels ein Austausch der Schneidvorrichtung vorteilhaft einfach vonstattengehen kann.

Ferner wird vorgeschlagen, dass eine Außenkontur des Schneidenhalters in einem Bereich der Ausnehmung gegenüber einem Umgebungsbereich verdickt ist. Unter einer "Außenkontur" des Schneidenhalters soll in diesem Zusammenhang insbesondere ein kleinster konvexer geometrischer Körper verstanden werden, welcher den Schneidenhalter gerade noch umgibt. Darunter, dass die Außenkontur in einem Bereich der Ausnehmung gegenüber einem Umgebungsbereich "verdickt" ist, soll insbesondere verstanden werden, dass die Außenkontur im Bereich der Ausnehmung eine größere Erstreckung senkrecht zu einer Längsrichtung der Außenkontur aufweist als im Umgebungsbereich. Hierdurch kann eine ausreichend hohe Festigkeit des Schneidenhalters, insbesondere im Bereich der Ausnehmung, sichergestellt werden.

Vorteilhaft ist der Schneidenhalter bezüglich einer Rotationssymmetrieachse der Ausnehmung zumindest im Wesentlichen rotationssymmetrisch bezüglich Rotationen um 180°. Unter einer "Rotationssymmetrieachse" eines Objekts soll insbesondere eine insbesondere das Objekt durchstoßende Achse verstanden werden, um welche das Objekt drehbar ist, insbesondere um zumindest einen bestimmten Winkel, so dass das gedrehte Objekt und das ursprüngliche Objekt zur Deckung kommen. Darunter, dass der Schneidenhalter "zumindest im Wesentlichen rotationssymmetrisch" bezüglich Rotationen um 180° ist, soll insbesondere verstanden werden, dass der Schneidenhalter bei Rotationen um 180° mit einem Volumenanteil von wenigstens 75 %, insbesondere von zumindest 80 %, vorzugsweise von mindestens 90 % und besonders vorteilhaft von wenigstens 95 % auf sich selbst abgebildet wird. Vorzugsweise wird der Schneidenhalter bei Rotationen um 180° höchstens von Kennzeichnungen, insbesondere Beschriftungen und/oder Logos, abgesehen auf sich selbst abgebildet.

Wenn der Schneidenhalter an die Ausnehmung unmittelbar anschließend auf einer der Nut gegenüberliegenden Seite eine Aufnahme für einen Schraubenkopf und/oder eine Mutter aufweist, kann ein vorteilhafter Schutz für den Schraubenkopf und/oder die Mutter erreicht werden. Insbesondere weist die Aufnahme eine größere Querschnittserstreckung als die Ausnehmung auf. Vorzugsweise ist die Aufnahme zu einem formschlüssigen Aufnehmen eines Sechskantschraubenkopfs und/oder einer Sechskantmutter vorgesehen, wodurch vorteilhaft eine Montage vereinfacht werden kann, da ein Gegenhalten mit einem Werkzeug bei einem Anschrauben des Schneidenhalters an das Basiselement entfallen kann.

Die Erfindung geht ferner aus von einem Basiselement für einen Zerkleinerungsrotor, insbesondere zur Holz- und/oder Erdreichzerkleinerung, insbesondere zum Mulchen, Schreddern und/oder Hacken, mit wenigstens einem Anlageteil, welcher dazu vorgesehen ist, mit einer Schneidvorrichtung, insbesondere einer erfindungsgemäßen Schneidvorrichtung, verbunden zu werden.

Es wird vorgeschlagen, dass der Anlageteil wenigstens eine unmittelbar entlang zumindest einer Oberfläche des Anlageteils verlaufende Längsmittellinie mit zumindest zwei winklig zueinander ausgerichteten Teilstrecken umfasst. Unter einem "Anlageteil" des Basiselements soll in diesem Zusammenhang insbesondere ein Teilbereich des Basiselements verstanden werden, welcher dazu vorgesehen ist, in einem montierten Zustand von der Nut zumindest teilweise aufgenommen zu werden. Im montierten Zustand umgreifen die zumindest zwei die Nut begrenzenden Oberflächenteilbereiche des Schneidenhalters den Anlageteil des Basiselements wenigstens teilweise. Vorzugsweise ist der Anlageteil frei von Kennzeichnungen, insbesondere Beschriftungen und/oder Logos. Unter einer "Längsmittellinie" des Anlageteils soll insbesondere eine Linie verstanden werden, welche insbesondere zumindest einmal geknickt ist und welche längs des Anlageteils und zumindest im Wesentlichen unmittelbar entlang der Oberfläche des Anlageteils und innerhalb einer Spiegelsymmetrieebene des Anlageteils verläuft. Darunter, dass die Längsmittellinie "zumindest im Wesentlichen unmittelbar entlang" der Oberfläche des Anlageteils verläuft, soll insbesondere verstanden werden, dass die Längsmittellinie zu wenigstens 50 %, insbesondere zu mindestens 60 %, vorzugsweise zu zumindest 70 % und besonders vorteilhaft zu wenigstens 80 % unmittelbar entlang der Oberfläche verläuft. Vorzugsweise weist der Anlageteil entlang wenigstens eines Großteils der Längsmittellinie betrachtet einen zumindest im Wesentlichen dreieckförmigen Querschnitt auf. Vorzugsweise weist der Anlageteil in entsprechenden Bereichen einen Querschnitt eines gleichschenkligen Dreiecks auf, wobei insbesondere Schenkel des gleichschenkligen Dreiecks durch die Oberfläche definiert sind. Hierdurch können vorteilhaft geringe Betriebskosten erreicht werden. Insbesondere können durch die winklige Anordnung der Teilstrecken eine sichere Zentrierung und ein vorteilhaft fester Halt der Schneidvorrichtung am Basiselement, insbesondere in einer zur Längsachse des Zerkleinerungsrotors senkrechten Richtung, erreicht werden, wodurch ein Verschleiß vorteilhaft gering gehalten werden kann. Ferner können vorteilhaft geringe Stückkosten durch eine einfache und kostengünstige Fertigung ermöglicht werden, da das Basiselement als Schmiedeteil ausgebildet werden kann. Des Weiteren kann mit einer relativ geringen Anforderung an eine Fertigungstoleranz des Basiselements ausgekommen werden.

In einer bevorzugten Ausgestaltung wird vorgeschlagen, dass die Teilstrecken einen maximalen Winkel zwischen 110° und 140° einschließen. Insbesondere schließen die Teilstrecken einen maximalen Winkel zwischen 115° und 135°, vorzugsweise zwischen 120° und 130° und besonders vorteilhaft zwischen 123° und 125° ein. Hierdurch können eine besonders sichere Zentrierung und ein besonders vorteilhafter Halt der Schneidvorrichtung am Basiselement erzielt werden. Insbesondere kann sich der Winkel zwischen den Teilstrecken der Längsmittellinie des Anlageteils von dem Winkel zwischen den Teilstrecken der Längsmittellinie der Nut unterscheiden, insbesondere um maximal 2,5°, insbesondere um höchstens 2°, vorzugsweise um maximal 1,5° und besonders vorteilhaft um höchstens 1°, wodurch eine gewisse Verspannung zwischen dem Schneidenhalter und dem Basiselement erzielt werden kann. Hierdurch kann einer insbesondere durch mechanische und/oder thermische Einflüsse bedingten Lockerung der Verbindung zwischen Schneidenhalter und Basiselement vorteilhaft begegnet werden. Gemäß der Erfindung weist die Oberfläche des Anlageteils wenigstens zwei Oberflächenteilbereiche auf, die in einem Winkel zwischen 75° und 105°, insbesondere zwischen 80° und 100°, vorteilhaft zwischen 85° und 95° und besonders vorteilhaft zwischen 89° und 91° zueinander angeordnet sind. Vorzugsweise sind die Oberflächenteilbereiche zumindest teilweise und vorzugsweise wenigstens zu einem Großteil eben ausgebildet. Hierdurch können eine Zentrierung und eine Halterung der Schneidvorrichtung am Basiselement weiter verbessert werden. Insbesondere kann ein vorteilhaft hoher Seitenhalt, insbesondere in einer zur Längsachse des Zerkleinerungsrotors parallelen Richtung, erreicht werden. Ferner kann vorteilhaft eine Verdrehsicherung der Schneidvorrichtung relativ zum Basiselement bereitgestellt werden. Insbesondere kann sich der Winkel zwischen den Oberflächenteilbereichen des Anlageteils von dem Winkel zwischen den Oberflächenteilbereichen des Schneidenhalters unterscheiden, insbesondere um maximal 2°, insbesondere um höchstens 1,5°, vorzugsweise um maximal 1° und besonders vorteilhaft um 0,5°. Vorzugsweise ist in diesem Fall der Winkel zwischen den Oberflächenteilbereichen des Schneidenhalters ein rechter Winkel und der Winkel zwischen den Oberflächenteilbereichen des Anlageteils ein insbesondere um mindestens 0,25° und vorzugsweise um höchstens 1° von einem rechten Winkel abweichender Winkel. Hierdurch kann eine weitere Verspannung zwischen dem Schneidenhalter und dem Basiselement erzielt werden.

Ferner wird ein Zerkleinerungsrotor mit wenigstens einem erfindungsgemäßen Basiselement und zumindest einer am Basiselement befestigten erfindungsgemäßen Schneidvorrichtung vorgeschlagen. Hierdurch kann ein Zerkleinerungsrotor mit vorteilhaft geringen Betriebskosten bereitgestellt werden.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teil eines Zerkleinerungsrotors mit einem Grundkörper, einem an Grundkörper befestigten Basiselement und einer am Basiselement montierten Schneidvorrichtung, welche einen Schneidenhalter und zwei vom Schneidenhalter getragene Schneiden aufweist, in einer isometrischen Darstellung von vorne,
- Fig. 2: die Schneidvorrichtung, deren Schneidenhalter an einer Hinterseite eine Nut aufweist, in einer isometrischen Einzeldarstellung von hinten,
- Fig. 3: die Schneidvorrichtung in einer isometrischen Einzeldarstellung von vorne,
- Fig. 4: die Schneidvorrichtung in einer Draufsicht von hinten,
- Fig. 5: die Schneidvorrichtung in einer Seitenansicht,
- Fig. 6: die Schneidvorrichtung in einer Schnittdarstellung entlang einer Linie VI-VI in Fig. 4,
- Fig. 7: die Schneidvorrichtung in einer Schnittdarstellung entlang einer Linie VII-VII in Fig. 6,
- Fig. 8: das Basiselement in einer isometrischen Darstellung von vorne,
- Fig. 9: das am Grundkörper befestigte Basiselement in einer Schnittdarstellung,
- Fig. 10: das Basiselement in einer Schnittdarstellung entlang einer Linie X-X in Fig. 9,
- Fig. 11: den Teil des Zerkleinerungsrotors in einer Schnittdarstellung und
- Fig. 12: den Teil des Zerkleinerungsrotors in einer Schnittdarstellung entlang einer Linie XII-XII in Fig. 11.

### Beschreibung des Ausführungsbeispiels

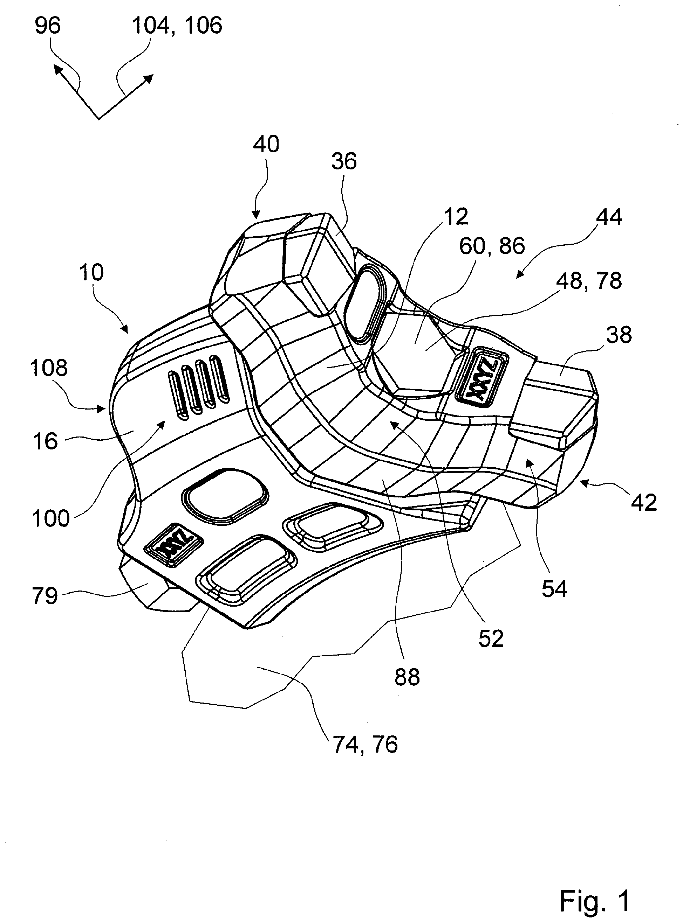

Figur 1 zeigt einen Teil eines Zerkleinerungsrotors 10, welcher insbesondere zur Holz-und/oder Erdreichzerkleinerung vorgesehen ist. Derartige Zerkleinerungsrotoren 10 kommen insbesondere in Anbauwerkzeugen für Nutzfahrzeuge zum Einsatz, insbesondere zum Mulchen und/oder Schreddern. Der Zerkleinerungsrotor 10 umfasst einen Grundkörper 74. Der Grundkörper 74 ist walzenförmig ausgebildet. Der Grundkörper 74 ist in Form eines Rohrs 76 ausgestattet. Der Grundkörper 74 besteht aus Stahl. Der Zerkleinerungsrotor 10 weist eine Vielzahl von Basiselementen 16 auf, von denen in Figur 1 lediglich eines gezeigt ist. Die Basiselemente 16 sind in Umfangsrichtung 104 des Grundkörpers 74 voneinander beabstandet angeordnet. Die Basiselemente 16 sind fest, insbesondere drehfest, mit dem Grundkörper 74 verbunden. Die Basiselemente 16 sind an den Grundkörper 74 angeschweißt. An jedem der Basiselemente 16 ist eine Schneidvorrichtung des Zerkleinerungsrotors 10 befestigt. Die Schneidvorrichtungen umfassen jeweils einen Schneidenhalter 12 und zwei von dem Schneidenhalter 12 getragene Schneiden 36, 38. Die Schneidvorrichtungen sind drehfest mit den Basiselementen 16 verbunden. Die Schneidvorrichtungen sind jeweils mittels eines Verbindungsmittels 48 mit den Basiselementen 16 verbunden. Bei dem Verbindungsmittel 48 handelt es sich um eine Schraube 78, welche mittels einer Mutter 79 fixiert ist.

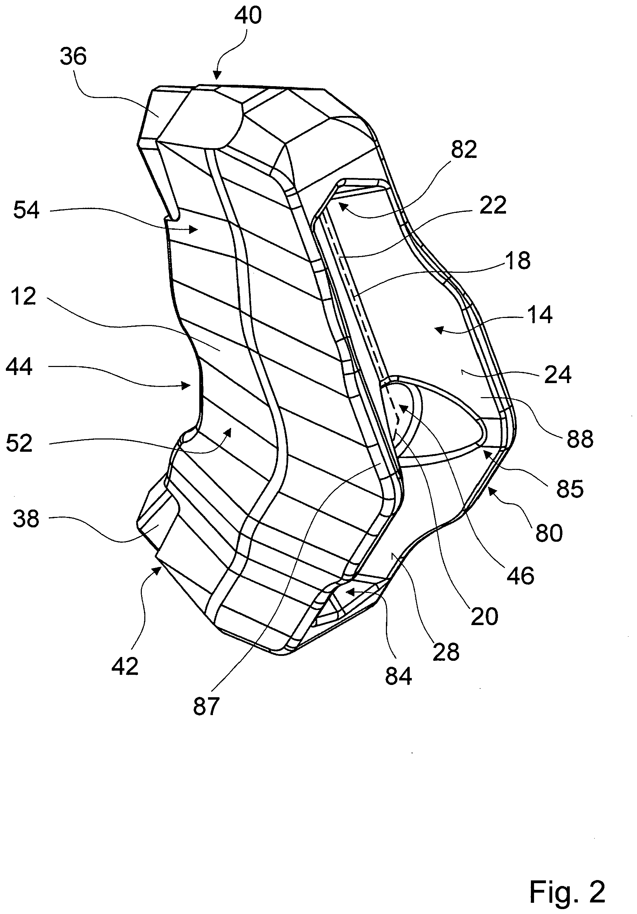

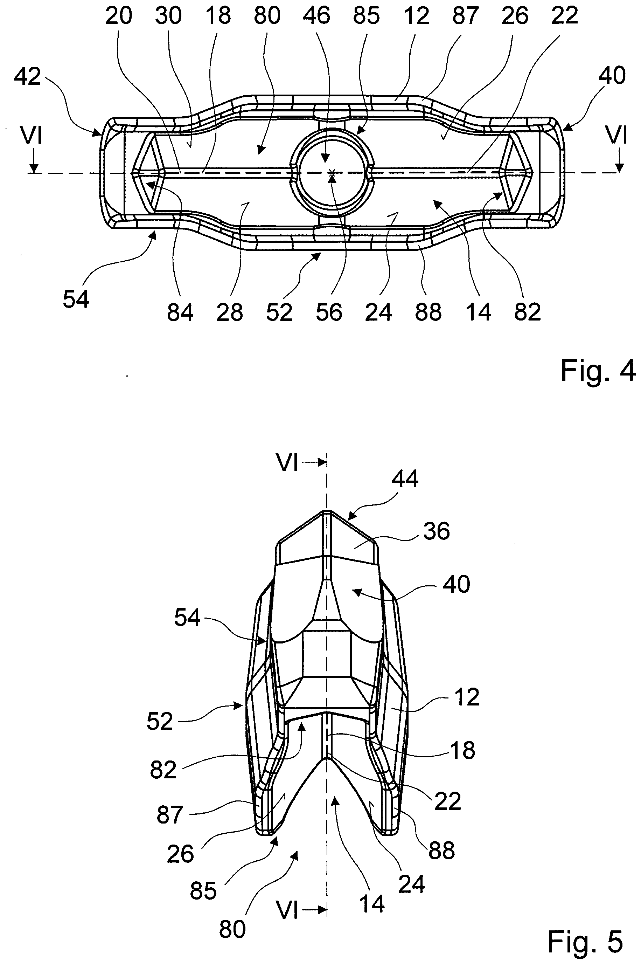

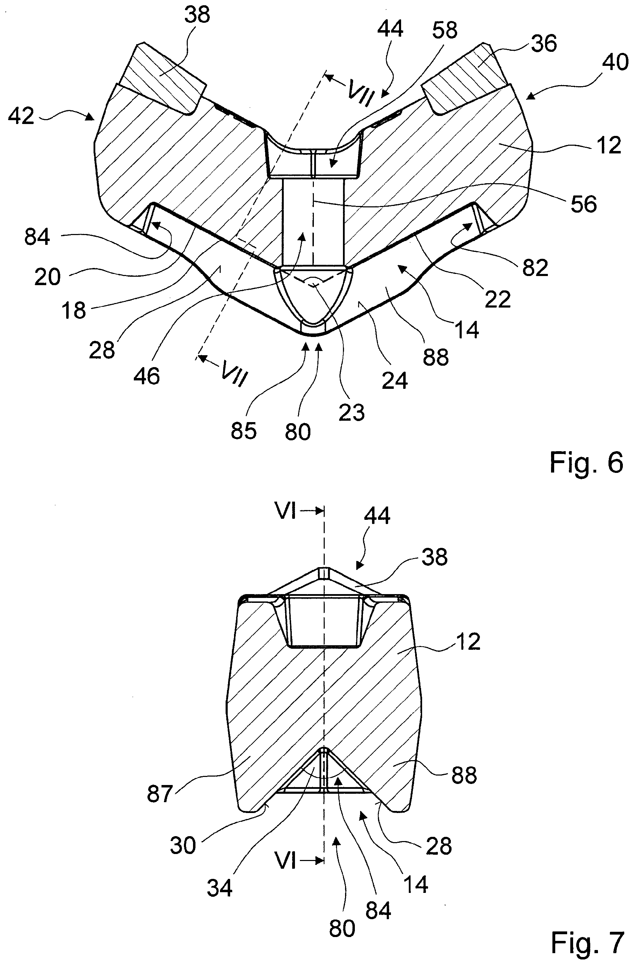

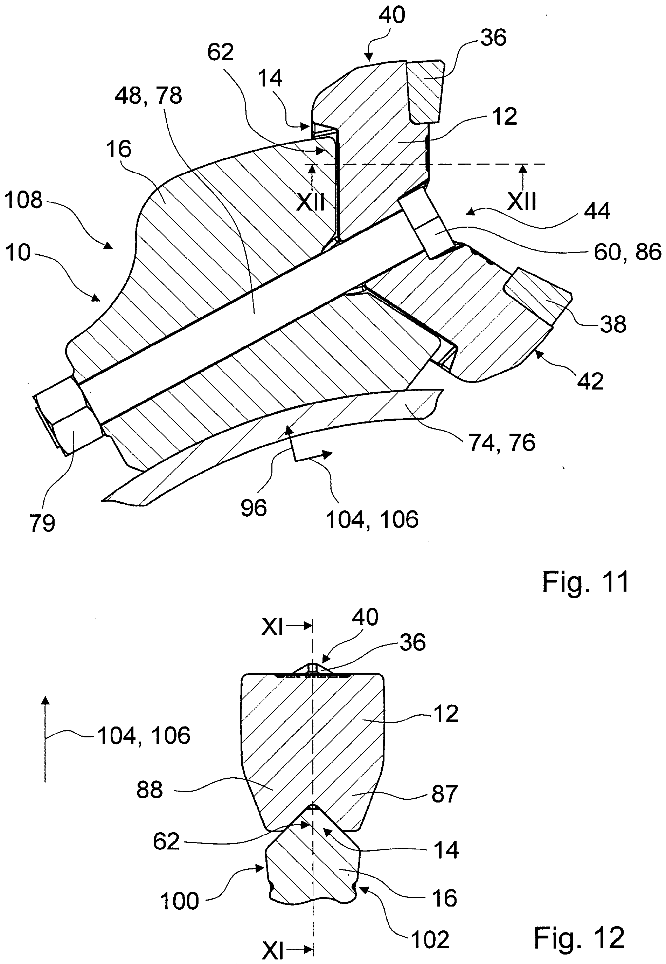

Figur 2 zeigt eine der Schneidvorrichtungen in einer isometrischen Einzeldarstellung von hinten. Der Schneidenhalter 12 besteht aus Stahl. Der Schneidenhalter 12 ist als Schmiedeteil ausgebildet. Der Schneidenhalter 12 der Schneidvorrichtung umfasst auf einer Rückseite 80 eine Nut 14, welche dazu vorgesehen ist, eines der Basiselemente 16 zumindest teilweise aufzunehmen. Die Nut 14 weist dabei eine Längsmittellinie 18 mit zumindest zwei winklig zueinander ausgerichteten Teilstrecken 20, 22 auf (vgl. auch Figur 6). Die Nut 14 ist in Längsrichtung des Schneidenhalters 12 ausgerichtet. Die Nut 14 erstreckt sich von einer Umgebung eines ersten Endes 40 des Schneidenhalters 12 zu einer Umgebung eines zweiten Endes 42 des Schneidenhalters 12. Die Nut 14 ist an ihren beiden Enden 82, 84 geschlossen ausgebildet. Die Nut 14 ist in einem montierten Zustand des Zerkleinerungsrotors 10 zumindest im Wesentlichen in radialer Richtung 96 des Grundkörpers 74 ausgerichtet (vgl. auch Figuren 1 und 11). Die Nut 14 weist eine Knickstelle 85 auf. Die Nut 14 ist von Oberflächenteilbereichen 24, 26, 28, 30 des Schneidenhalters 12 begrenzt (vgl. auch Figur 4).

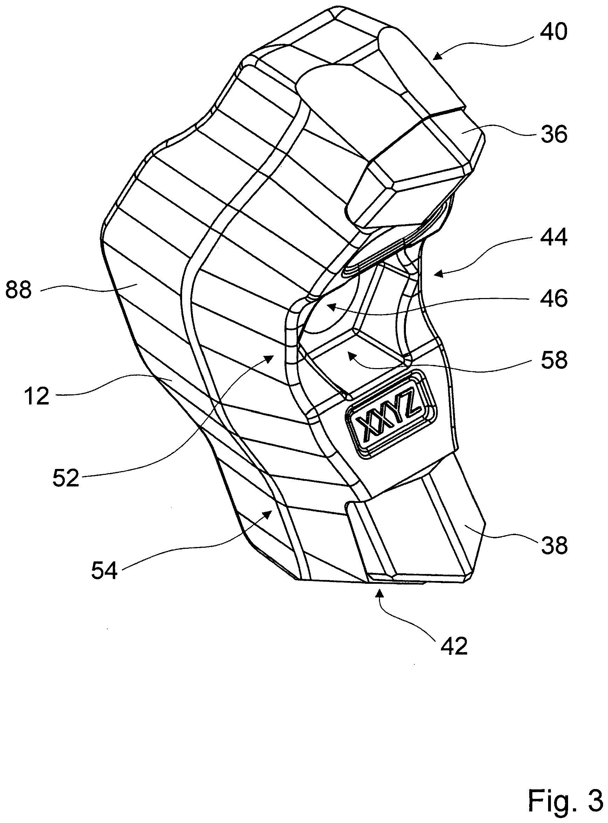

Figur 3 zeigt die Schneidvorrichtung in einer isometrischen Einzeldarstellung von vorne. Die zwei Schneiden 36, 38 der Schneidvorrichtung sind an den beiden Enden 40, 42 des Schneidenhalters 12 auf einer der Nut 14 gegenüberliegenden Seite 44 des Schneidenhalters 12 angeordnet. Die Schneiden 36, 38 bestehen aus einem gehärteten Stahl oder einem anderen geeigneten Material. Die Schneiden 36, 38 weisen eine größere Härte auf als der Schneidenhalter 12. Die Schneiden 36, 38 sind einstückig mit dem Schneidenhalter 12 verbunden. Die Schneiden 36, 38 sind mit dem Schneidenhalter 12 verlötet. Die Schneiden 36, 38 erstrecken sich jeweils über eine gesamte Breite des Schneidenhalters 12 an dessen Enden 40, 42, so dass die Enden 40, 42 des Schneidenhalters 12 durch die Schneiden 36, 38 zumindest teilweise vor Verschleiß geschützt sind. Die im montierten Zustand des Zerkleinerungsrotors 10 von einer Rotationsachse des Grundkörpers 74 weiter beabstandete Schneide 36 wird bei einem Zerkleinerungsvorgang durch eine Rotation des Zerkleinerungsrotors 10 um seine Längsachse mit einem zu zerkleinernden Material in Kontakt gebracht.

Figur 4 zeigt die Schneidvorrichtung in einer Draufsicht von hinten. Eine Breite der Nut 14 entspricht an jedem Punkt entlang einer Längserstreckung des Schneidenhalters 12 im Wesentlichen einer Breite des Schneidenhalters 12 (vgl. auch Figur 5). Der Schneidenhalter 12 weist eine Ausnehmung 46 zu einer Durchführung des Verbindungsmittels 48 auf. Die Ausnehmung 46 ist zylinderförmig ausgebildet. Eine Außenkontur des Schneidenhalters 12 ist in einem Bereich 52 der Ausnehmung 46 gegenüber einem Umgebungsbereich 54 verdickt (vgl. auch Figur 2). Die Nut 14 begrenzende Wände 87, 88 weisen im Bereich 52 eine Formgebung auf, welche eine Aufnahme des Verbindungsmittels 48 gestattet (vgl. auch Figur 2). Der Schneidenhalter 12 ist bezüglich einer Rotationssymmetrieachse 56 der Ausnehmung 46 zumindest im Wesentlichen rotationssymmetrisch bezüglich Rotationen um 180°, so dass der Schneidenhalter 12 in zwei verschiedenen Lageausrichtungen am Basiselement 16 montierbar ist. Hierdurch kann eine Standzeit der Schneidvorrichtung vergrößert werden, da ein kompletter Austausch der Schneidvorrichtung seltener erfolgen kann. Stattdessen kann im Falle eines starken Verschleißes einer der Schneiden 36, 38 der Schneidenhalter 12 um 180° rotiert am Basiselement 16 fixiert werden, so dass fortan die andere Schneide 36, 38 beim Zerkleinerungsvorgang zum Einsatz kommt.

Figur 5 zeigt die Schneidvorrichtung in einer Seitenansicht auf das Ende 40 des Schneidenhalters 12.

Figur 6 zeigt die Schneidvorrichtung in einer Schnittdarstellung entlang einer Linie VI-VI in Figur 4. Die Teilstrecken 20, 22 der Längsmittellinie 18 schließen einen maximalen Winkel 23 von 125° ein. Die Längsmittellinie 18 verläuft dabei teilweise über den Bereich 52 der Ausnehmung 46. Der Schneidenhalter 12 umfasst an die Ausnehmung 46 unmittelbar anschließend auf der der Nut 14 gegenüberliegenden Seite 44 eine Aufnahme 58 für einen Schraubenkopf 60 des Verbindungsmittels 48. Die Aufnahme 58 weist einen sechseckigen Querschnitt auf (vgl. auch Figur 3). Die Aufnahme 58 ist zu einem formschlüssigen Aufnehmen eines Sechskant-Schraubenkopfs 86 vorgesehen, wodurch eine Montage des Schneidenhalters 12 am Basiselement 16 vereinfacht werden kann, da ein Gegenhalten entfallen kann (vgl. auch Figur 1). Zum Schutz des Schraubenkopfs 60 ist die Aufnahme 58 derart tief ausgebildet, dass der Schraubenkopf 60 in einem montierten Zustand zumindest weitgehend in der Aufnahme 58 versenkt ist. Der Schneidenhalter 12 ist in wenigstens einer Seitenansicht zumindest im Wesentlichen V-förmig ausgebildet, wobei die Schneiden 36, 38 an den vorstehenden Enden 40, 42 des Schneidenhalters 12 angeordnet sind. Die die Nut 14 begrenzenden Wände 87, 88 sind im Bereich 52 der Ausnehmung 46 höher ausgebildet als im Umgebungsbereich 54 (vgl. auch Figur 5).

Figur 7 zeigt die Schneidvorrichtung in einer Schnittdarstellung entlang einer Linie VII-VII in Figur 6. Die jeweils zwei die Nut 14 begrenzenden und im montierten Zustand des Zerkleinerungsrotors 10 von der Rotationsachse des Grundkörpers 74 gleich weit beabstandeten Oberflächenteilbereiche 24, 26, 28, 30 sind unter einem Winkel 34 von 89° zueinander angeordnet. Die Nut 14 weist somit entlang wenigstens eines Großteils der Längsmittellinie 18 einen Querschnitt eines gleichschenkligen Dreiecks auf, wobei Schenkel des Dreiecks durch die Oberflächenteilbereiche 24, 26, 28, 30 gebildet sind (vgl. auch Figur 2).

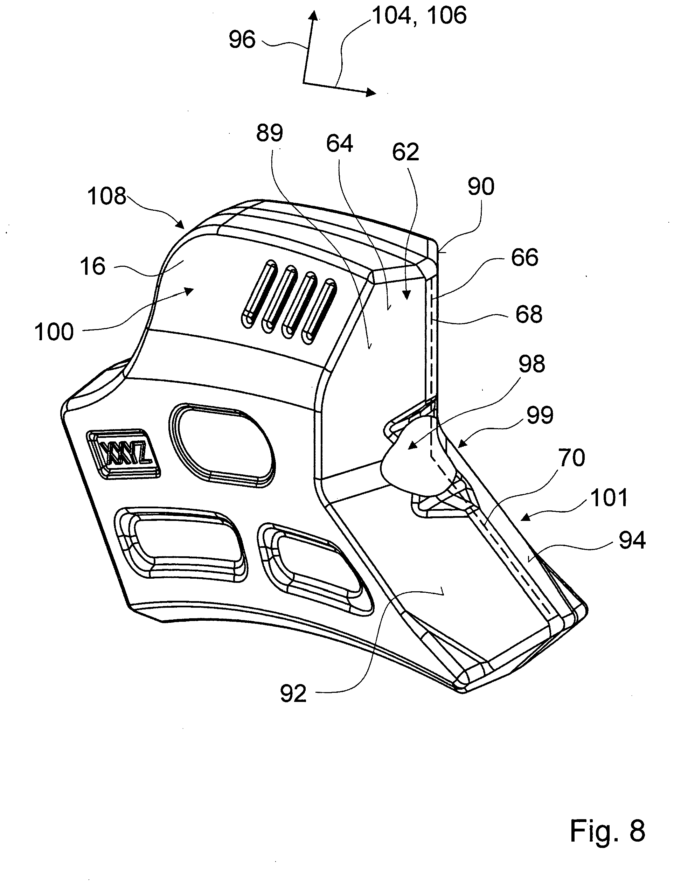

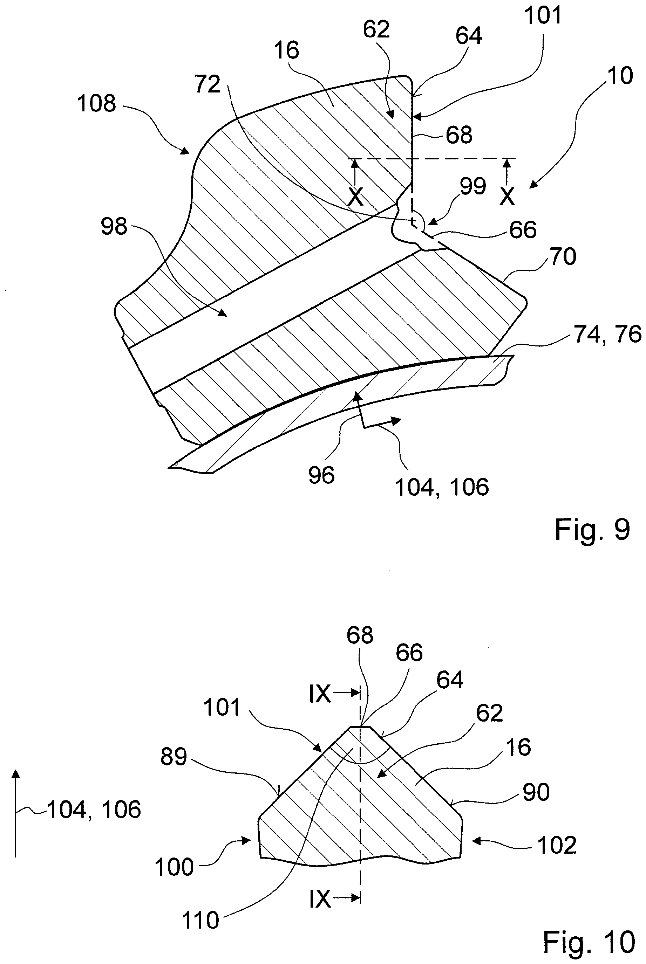

Figur 8 zeigt eines der Basiselemente 16 in einer isometrischen Darstellung von vorne. Das Basiselement 16 besteht aus Stahl. Das Basiselement 16 ist als Schmiede- oder Gussteil ausgebildet. Das Basiselement 16 weist einen Anlageteil 62 auf, welcher dazu vorgesehen ist, bei einer Verbindung mit der Schneidvorrichtung von der Nut 14 des Schneidenhalters 12 zumindest teilweise aufgenommen zu werden (vgl. auch Figur 1). Im montierten Zustand umgreifen die Wände 87, 88 den Anlageteil 62 zumindest teilweise. Der Anlageteil 62 weist Oberflächenteilbereiche 89, 90, 92, 94 auf, welche dazu vorgesehen sind, im montierten Zustand die Oberflächenteilbereiche 24, 26, 28, 30 des Schneidenhalters 12 zu kontaktieren (vgl. auch Figuren 2 und 4). Der Anlageteil 62 umfasst eine unmittelbar entlang einer Oberfläche 64 des Anlageteils 62 verlaufende Längsmittellinie 66 mit zumindest zwei winklig zueinander ausgerichteten Teilstrecken 68, 70. Das Basiselement 16 weist eine zur Ausnehmung 46 des Schneidenhalters 12 korrespondierende Ausnehmung 98 für das Verbindungsmittel 48 auf (vgl. auch Figuren 9 und 11). Die Ausnehmung 98 ist im montierten Zustand des Zerkleinerungsrotors 10 zumindest im Wesentlichen in Umfangsrichtung 104 des Grundkörpers 74 ausgerichtet. Die Längsmittellinie 66 verläuft zumindest teilweise über die Ausnehmung 98 hinweg. Der Anlageteil 62 ist in einem Bereich 99 der Ausnehmung 98 gegenüber einem Umgebungsbereich 101 nach hinten, d.h. entgegen einer Drehrichtung 106 des Zerkleinerungsrotors 10, zurückgesetzt. Seitenflanken 100, 102 des Basiselements 16 sind nach hinten aufeinander zulaufend ausgebildet (vgl. auch Figur 10), wodurch ein Verschleiß des Basiselements 16 durch zerkleinertes Material und/oder durch ein Eindringen ins Erdreich verringert werden kann. Ferner ist eine radial äußere Flanke 108 des Basiselements 16 entgegen der Drehrichtung 106 zum Grundkörper 74 hin zulaufend ausgebildet.

Figur 9 zeigt das am Grundkörper 74 befestigte Basiselement 16 in einer seitlichen Schnittdarstellung. Die Teilstrecken 68, 70 schließen einen maximalen Winkel 72 von 124° ein.

Figur 10 zeigt das Basiselement 16 in einer Schnittdarstellung entlang einer Linie X-X in Figur 9. Jeweils zwei im montierten Zustand des Basiselements 16 am Grundkörper 74 von der Rotationsachse des Grundkörpers 74 gleich weit beabstandete Oberflächenteilbereiche 89, 90, 92, 94 sind unter einem Winkel 110 von 90° zueinander angeordnet.

Figur 11 zeigt den Teil des montierten Zerkleinerungsrotors 10 in einer seitlichen Schnittdarstellung durch die Längsmittellinie 18 der Nut 14 des Schneidenhalters 12 und die Längsmittellinie 66 des Anlageteils 62 des Basiselements 16. Die Nut 14 und der Anlageteil 62 sind derart aufeinander abgestimmt, dass der Anlageteil 62 wenigstens teilweise in die Nut 14 hineinpasst und vom Schneidenhalter 12 im montierten Zustand zumindest teilweise umgriffen ist. Da die Winkel 23, 72 zwischen den Teilstrecken 20, 22 der Längsmittellinie 18 und den Teilstrecken 68, 70 der Längsmittellinie 66 leicht unterschiedlich sind, ergibt sich bei einem Anziehen des Verbindungsmittels 48 eine Verspannung des Schneidenhalters 12 mit dem Basiselement 16 (vgl. auch Figuren 6 und 9). Hierdurch kann eine betriebsbedingte und/oder temperaturbedingte Lockerung und/oder Überbeanspruchung des Verbindungsmittels 48 vermieden werden.

Figur 12 zeigt den Teil des Zerkleinerungsrotors 10 in einer Schnittdarstellung entlang einer Linie XII-XII in Figur 11. Da die Winkel 34, 110 zwischen jeweils zwei Oberflächenteilbereichen 24, 26, 28, 30 des Schneidenhalters 12, welche im montierten Zustand des Zerkleinerungsrotors 10 den gleichen Abstand von der Rotationsachse aufweisen, und jeweils zwei Oberflächenteilbereichen 89, 90, 92, 94 des Anlageteils 62, welche im montierten Zustand des Zerkleinerungsrotors 10 den gleichen Abstand von der Rotationsachse aufweisen, leicht unterschiedlich sind, ergibt sich beim Anziehen des Verbindungsmittels 48 eine zusätzliche Verspannung des Schneidenhalters 12 mit dem Basiselement 16 (vgl. auch Figuren 7 und 10). Hierdurch kann eine betriebsbedingte und/oder temperaturbedingte Lockerung und/oder Überbeanspruchung des Verbindungsmittels 48 besonders vorteilhaft vermieden werden. Durch einen im montierten Zustand vorhandenen Formschluss zwischen dem Schneidenhalter 12 und dem Anlageteil 62 des Basiselements 16 ergibt sich eine Fixierung des Schneidenhalters 12 relativ zum Basiselement 16 sowohl in Umfangsrichtung 104 als auch in der radialen Richtung 96.

In einer alternativen Ausgestaltung können zusätzlich zu einer Verschleißreduzierung an einem Schneidenhalter auf einer Schneiden aufweisenden Vorderseite des Schneidenhalters zwischen einer Ausnehmung zur Aufnahme eines Verbindungsmittels und den Schneiden Hartmetallblättchen vorgesehen sein. Ferner sind Schneiden mit einer anderen Ausgestaltung denkbar, insbesondere auch an einen Schneidenhalter angeschraubte Schneiden.

## Patentansprüche

1. Schneidvorrichtung für einen Zerkleinerungsrotor (10), insbesondere zur Holz-und/oder Erdreichzerkleinerung, mit wenigstens einem Schneidenhalter (12), der zumindest eine Nut (14) umfasst, welche dazu vorgesehen ist, ein Basiselement (16) des Zerkleinerungsrotors (10) zumindest teilweise aufzunehmen, und die wenigstens eine Längsmittellinie (18) mit zumindest zwei winklig zueinander ausgerichteten Teilstrecken (20, 22) aufweist, **dadurch gekennzeichnet, dass** die Nut (14) durch zumindest zwei Oberflächenteilbereiche (24, 26, 28, 30) des Schneidenhalters (12) begrenzt ist, die in einem Winkel (34) zwischen 75° und 105° zueinander angeordnet sind.

2. Schneidvorrichtung nach Anspruch 1, **dadurch gekennzeichnet, dass** die Teilstrecken (20, 22) einen maximalen Winkel (23) zwischen 110° und 140° einschließen.

3. Schneidvorrichtung nach einem der vorhergehenden Ansprüche, **dadurch gekennzeichnet, dass** die Nut (14) entlang wenigstens eines Großteils der Längsmittellinie (18) einen zumindest im Wesentlichen dreieckförmigen Querschnitt aufweist.

4. Schneidvorrichtung nach einem der vorherigen Ansprüche, **dadurch gekennzeichnet, dass** der Schneidenhalter (12) in wenigstens einer Seitenansicht zumindest im Wesentlichen V-förmig ausgebildet ist.

5. Schneidvorrichtung nach einem der vorherigen Ansprüche, **gekennzeichnet durch** wenigstens zwei Schneiden (36, 38), welche an einander gegenüberliegenden Enden (40, 42) des Schneidenhalters (12) auf einer der Nut (14) gegenüberliegenden Seite (44) des Schneidenhalters (12) angeordnet sind.

6. Schneidvorrichtung nach einem der vorhergehenden Ansprüche, **dadurch gekennzeichnet, dass** der Schneidenhalter (12) zumindest eine Ausnehmung (46) zu einer Durchführung eines Verbindungsmittels (48) aufweist, welches dazu vorgesehen ist, den Schneidenhalter (12) am Basiselement (16) zu befestigen.

7. Schneidvorrichtung nach Anspruch 6, **dadurch gekennzeichnet, dass** eine Außenkontur des Schneidenhalters (12) in einem Bereich (52) der Ausnehmung (46) gegenüber einem Umgebungsbereich (54) verdickt ist.

8. Schneidvorrichtung nach Anspruch 6 oder 7, **dadurch gekennzeichnet, dass** der Schneidenhalter (12) bezüglich einer Rotationssymmetrieachse (56) der Ausnehmung (46) zumindest im Wesentlichen rotationssymmetrisch bezüglich Rotationen um 180° ist.

9. Schneidvorrichtung nach einem der Ansprüche 6 bis 8, **dadurch gekennzeichnet, dass** der Schneidenhalter (12) an die Ausnehmung (46) unmittelbar anschließend auf einer der Nut (14) gegenüberliegenden Seite (44) eine Aufnahme (58) für einen Schraubenkopf (60) und/oder eine Mutter aufweist.

10. Schneidenhalter (12) für eine Schneidvorrichtung nach einem der vorhergehenden Ansprüche, der Schneidenhalter (12) umfassend zumindest eine Nut (14), welche dazu vorgesehen ist, ein Basiselement (16) des Zerkleinerungsrotors (10) zumindest teilweise aufzunehmen, und die wenigstens eine Längsmittellinie (18) mit zumindest zwei winklig zueinander ausgerichteten Teilstrecken (20, 22) aufweist, **dadurch gekennzeichnet, dass** die Nut (14) durch zumindest zwei Oberflächenteilbereiche (24, 26, 28, 30) des Schneidenhalters (12) begrenzt ist, die in einem Winkel (34) zwischen 75° und 105° zueinander angeordnet sind.

11. Basiselement (16) für einen Zerkleinerungsrotor (10), insbesondere zur Holz-und/oder Erdreichzerkleinerung, mit wenigstens einem Anlageteil (62), welcher dazu vorgesehen ist, mit einer Schneidvorrichtung, insbesondere nach einem der Ansprüche 1 bis 9, verbunden zu werden, wobei der Anlageteil (62) wenigstens eine unmittelbar entlang zumindest einer Oberfläche (64) des Anlageteils (62) verlaufende Längsmittellinie (66) mit zumindest zwei winklig zueinander ausgerichteten Teilstrecken (68, 70) umfasst, **dadurch gekennzeichnet, dass** die Oberfläche (64) des Anlageteils (62) wenigstens zwei Oberflächenteilbereiche (89, 90, 92, 94) aufweist, die in einem Winkel (110) zwischen 75° und 105° zueinander angeordnet sind.

12. Basiselement (16) nach Anspruch 11, **dadurch gekennzeichnet, dass** die Teilstrecken (68, 70) einen maximalen Winkel (72) zwischen 110° und 140° einschließen.

13. System mit einem Basiselement (16) nach Anspruch 11 oder 12 und einer am Basiselement (16) befestigten Schneidvorrichtung nach einem der Ansprüche 1 bis 9.

## Claims

1. Cutting device for a comminution rotor (10), in particular for comminuting wood and/or soil, with at least one cutter holder (12) comprising at least one groove (14), which is configured to at least partly receive a basis element (16) of the comminution rotor (10), and comprises at least one longitudinal middle line (18) with at least two partial lengths (20, 22) which are oriented at an angle with respect to each other, **characterised in that** the groove (14) is delimited by at least two partial surface areas (24, 26, 28, 30) of the cutter holder (12), which are arranged in an angle (34) between 75 ° and 105 ° with respect to each other.

2. Cutting device according to claim 1, **characterised in that** the partial lengths (20, 22) include a maximum angle (23) between 110 ° and 140 °.

3. Cutting device according to one of the preceding claims, **characterised in that,** along at least a major part of the longitudinal middle line (18), the groove (14) has an at least substantially triangle-shaped cross section.

4. Cutting device according to one of the preceding claims, **characterised in that** the cutter holder (12) is embodied at least substantially V-shaped in at least one lateral view.

5. Cutting device according to one of the preceding claims, **characterised by** at least two cutters (36, 38), which are arranged on opposite-situated ends (40, 42) of the cutter holder (12) on a side (44) of the cutter holder (12) which is situated opposite the groove (14).

6. Cutting device according to one of the preceding claims, **characterised in that** the cutter holder (12) comprises at least one recess (46) for passing through of a connection means (48), which is configured for fastening the cutter holder (12) to the basis element (16).

7. Cutting device according to claim 6, **characterised in that** an outer contour of the cutter holder (12) is, in a region (52) of the recess (46), thickened with respect to a surrounding region (54).

8. Cutting device according to claim 6 or 7, **characterised in that,** as regards rotations by 180 °, the cutter holder (12) is at least substantially rotationally symmetrical with respect to a rotational symmetry axis (56) of the recess (46).

9. Cutting device according to one of claims 6 to 8, **characterised in that** the cutter holder (12) comprises, directly adjacent to the recess (46) on a side (44) opposite the groove (14), a receptacle (58) for a screw head (60) and/or a nut.

10. Cutter holder (12) for a cutting device according to one of the preceding claims, the cutter holder (12) comprising at least one groove (14), which is configured to at least partly receive a basis element (16) of the comminution rotor (10), and which comprises at least one longitudinal middle line (18) with at least two partial lengths (20, 22) which are oriented at an angle with respect to each other, **characterised in that** the groove (14) is delimited by at least two partial surface areas (24, 26, 28, 30) of the cutter holder (12), which are arranged at an angle (34) between 75 ° and 105 ° with respect to each other.

11. Basis element (16) for a comminution rotor (10), in particular for comminuting wood and/or soil, with at least one abutment portion (62) which is configured to be connected to a cutting device, in particular according to one of claims 1 to 9, wherein the abutment portion (62) comprises at least one longitudinal middle line (18) extending directly along at least one surface (64) of the abutment portion (62) and having at least two partial lengths (68, 70) which are oriented at an angle with respect to each other, **characterised in that** the surface (64) of the abutment part (62) comprises at least two partial surface areas (89, 90, 92, 94) which are oriented at an angle (110) between 75 ° and 105 ° with respect to each other.

12. Basis element (16) according to claim 11, **characterised in that** the partial lengths (68, 70) include a maximum angle (72) between 110 ° and 140°.

13. System with a basis element (16) according to claim 11 or 12 and with a cutting device according to one of claims 1 to 9, which is fastened to the basis element (16).

## Revendications

1. Dispositif de coupe pour un rotor de broyage (10), notamment pour broyer de bois ou de sol, avec ou moins un support de lame (12), comportant au moins une rainure (14), laquelle est prévue à au moins partiellement accommoder un élément basique (16) du rotor de broyage (10) et laquelle comporte au moins une ligne médiane longitudinale (18) avec au moins deux longueurs partielles (20, 22) orientées angulairement l'une par rapport à l'autre, **caractérisé en ce que** la rainure (14) est délimitée par au moins deux zones partielles de surface (24, 26, 28, 30) du support de lame (12) disposées de telle façon, qu'elles incluent un angle (34) entre 75 ° et 105 °.

2. Dispositif de coupe selon la revendication 1, **caractérisé en ce que** les longueurs partielles (20, 22) incluent un angle maximal (23) entre 110 ° et 140 °.

3. Dispositif de coupe selon l'une quelconque des revendications précédentes, **caractérisé en ce que** la rainure (14) comporte, le long d'au moins grande partie de la ligne médiane longitudinale (18), une section transversale au moins substantiellement en forme triangulaire.

4. Dispositif de coupe selon l'une quelconque des revendications précédentes, **caractérisé en ce que** le support de lame (12) est dans au moins une vue latérale implémenté en forme de V.

5. Dispositif de coupe selon l'une quelconque des revendications précédentes, **caractérisé par** au moins deux lames (36, 38), lesquelles sont disposées en extrémités opposées (40, 42) du support de lame (12) sur un côté (44) du support de lame (12) situé envers à la rainure (14).

6. Dispositif de coupe selon l'une quelconque des revendications précédentes, **caractérisé en ce que** le support de lame (12) comporte au moins une échancrure (46) pour faire traverser un moyen connectif (48), lequel est prévu à fixer le support de lame (12) à l'élément basique (16).

7. Dispositif de coupe selon la revendication 6, **caractérisé en ce qu'**une contour extérieure du support de lame (12) est épaissie dans une région (52) de l'échancrure (46) par rapport à une région entourant (54).

8. Dispositif de coupe selon l'une quelconque des revendications 6 ou 7, **caractérisé en ce qu',** en ce qui concerne des rotations par 180°, le support de lame (12) est au moins substantiellement à symétrie rotative par rapport à un axe rotatif (56) de l'échancrure (46) en ce qui concerne des rotations par 180°.

9. Dispositif de coupe selon l'une quelconque des revendications 6 à 8, **caractérisé en ce que** le support de lame (12) comporte, directement contigu à l'échancrure (46) sur un côté (44) situé envers à la rainure (14), un receveur (58) pour une tête de vis (60) et/ou un écrou.

10. Support de lame (12) pour un dispositif de coupe selon l'une quelconque des revendications précédentes, le support de lame (12) comprenant au moins une rainure (14), laquelle est prévue à au moins partiellement recevoir un élément basique (16) du rotor de broyage (10), et comprenant au moins une ligne médiane longitudinale (18) avec au moins deux longueurs partielles (20, 22) orientées angulairement l'une par rapport à l'autre, **caractérisé en ce que** la rainure (14) est délimitée par au moins deux zones partielles de surface (24, 26, 28, 30) du support de lame (12), lesquelles sont disposées incluant un angle (34) entre 75° et 105° l'une par rapport à l'autre.

11. Elément basique (16) pour un rotor de broyage (10), notamment pour broyer de bois ou de sol, avec au moins une portion à contiguïté (62) prévue à être raccordée à un dispositif de coupe, notamment selon l'une quelconque des revendications 1 à 9, la portion à contiguïté (62) comprenant au moins une ligne médiane longitudinale (66) s'étendant directement le long d'au moins une surface (64) de la portion à contiguïté (62), avec au moins deux longueurs partielles (68, 70) orientées angulairement l'une par rapport à l'autre, **caractérisé en ce que** la surface (64) de la portion à contiguïté (62) comporte au moins deux régions partielles de surface (89, 90, 92, 94) disposées de telle manière qu'elles incluent l'une par rapport à l'autre un angle (110) entre 75 ° et 105°.

12. Elément basique (16) selon la revendication 1, **caractérisé en ce que** les longueurs partielles (68, 70) incluent un angle maximal (72) entre 110 ° et 140°.

13. Système avec un élément basique (16) selon l'une quelconque des revendications 11 ou 12 et avec un dispositif de coupe selon l'une quelconque des revendications 1 à 9 attaché à l'élément basique (16).
